Europäisches Patentamt

European Patent Office

Office européen des brevets

(11) Numéro de publication: **0 216 678**
**A1**

## (12) DEMANDE DE BREVET EUROPEEN

(21) Numéro de dépôt: 86401875.9

(22) Date de dépôt: 26.08.86

(51) Int. Cl.⁴: **B 62 D 1/18**

(30) Priorité: 06.09.85 FR 8513283

(43) Date de publication de la demande:
01.04.87 Bulletin 87/14

(84) Etats contractants désignés:
AT BE CH DE GB IT LI LU NL SE

(71) Demandeur: CYCLES PEUGEOT Société dite:
Beaulieu
F-25700 Valentigney (FR)

(72) Inventeur: Barnabe, Jean-Pierre
17, Combes Saint Germain
F-25700 Valentigney (FR)

Clerc, Michel
27, rue des Graviers
F-25700 Valentigney (FR)

Mouhot, Frédéric
5, rue des Vergers
F-25420 Voujeaucourt (FR)

(74) Mandataire: Moncheny, Michel et al
c/o Cabinet Lavoix 2 Place d'Estienne d'Orves
F-75441 Paris Cedex 09 (FR)

(54) Sous-ensemble télescopique pour colonne de direction.

(57) Ce sous-ensemble est formé par deux arbres (1 et 2) respectivement intérieur et extérieur, dont les surfaces en regard sont en contact localement au voisinage de points diamétralement opposés (16, 18), un espace (22) étant ménagé entre eux, entre les zones de contact. Ces zones de contact (8, 10, 12, 14) sont serrées par emmanchement à force et déformation élastique, l'arbre interne 1 comportant initialement des surépaisseurs, tandis que la cavité de l'arbre externe comporte des portions plus étroites que ces surépaisseurs. Les arbres peuvent cependant se déplacer axialement sous l'effet d'un choc important.

FIG. 2

**Description**

Sous-ensemble télescopique pour colonne de direction.-

Il est, de plus en plus fréquent de réaliser les colonnes de direction de véhicule automobile au moyen d'un sous-ensemble télescopique susceptible, en cas de choc, de se rétracter axialement afin d'éviter que des blessures importantes ne soient apportées à la poitrine du conducteur. Or, ces colonnes doivent obligatoirement transmettre, de manière sûre et fidèle, les mouvements de rotation du volant.

Pour concilier ces deux exigences. les colonnes de direction actuelles comportent souvent un sousensemble formé par deux arbres montés télescopiquement l'un à l'intérieur de l'autre et reliés par une ou plusieurs pièces intermédiaires destinées à rattraper les jeux et à doser les efforts axiaux, de sorte que la rétraction de la colonne ne s'effectue que sous un effort déterminé. Ce système complique considérablement la réalisation de la colonne de direction. de sorte qu'il est coûteux et délicat à mettre en place.

La présente invention a pour but de remédier à ces inconvénients en fournissant un sous-ensemble télescopique qui n'utilise pas de pièce intermédiaire et permette cependant, à la fois un entraînement sûr en rotation et une rétraction sous l'effet d'un choc important, sans risque de grippage.

Cette invention a. en effet, pour objet un sous-ensemble télescopique comportant deux arbres dont les extrémités sont emboîtées l'une dans l'autre, dans lequel les surfaces en regard des deux arbres sont en contact d'emmanchement à force avec déformation élastique conjointe, dans deux zones étroites voisines de deux sommets diamétralement opposés le long de surfaces sensiblement planes situées de part et d'autre de ces sommets, tandis qu'un jeu sépare ces surfaces sur tout le reste de leur pourtour.

Les deux arbres sont ainsi rendus solidaires en rotation par le contact étroit des deux zones opposées. mais sous l'effet d'un choc important, suffisant pour contrecarrer l'effort de contact entre les zones emmanchées, ils peuvent se déplacer axialement l'un par rapport à l'autre.

Selon une autre caractéristique de l'invention, l'arbre intérieur a, dans les zones de contact, une plus grande largeur que sur le reste de son pourtour.

De préférence, la cavité de l'arbre extérieur comporte des parties plus étroites qui correspondent aux zones de contact.

Selon un mode de réalisation préféré, les deux arbres sont en contact sur une certaine longueur et forment. au-delà, une zone de dégagement.

La description ci-dessous de modes de réalisation donnés à titre d'exemples non limitatifs, et représentés aux dessins annexés, fera d'ailleurs ressortir les avantages et caractéristiques de l'invention.

Sur ces dessins :

- la Fig. 1 est une vue en coupe longitudinale d'un sous-ensemble de colonne de direction suivant l'invention ;

- la Fig. 2 est une vue en coupe suivant la ligne 2-2 de la Figure 1 ;

- la Fig. 3 est une vue analogue à la Figure 2, d'une variante de réalisation ;

- la Fig. 4 est une vue en coupe transversale de l'arbre extérieur avant l'assemblage du sous-ensemble ;

- la Fig. 5 est une vue analogue à la Figure 4 montrant l'arbre intérieur avant son assemblage.

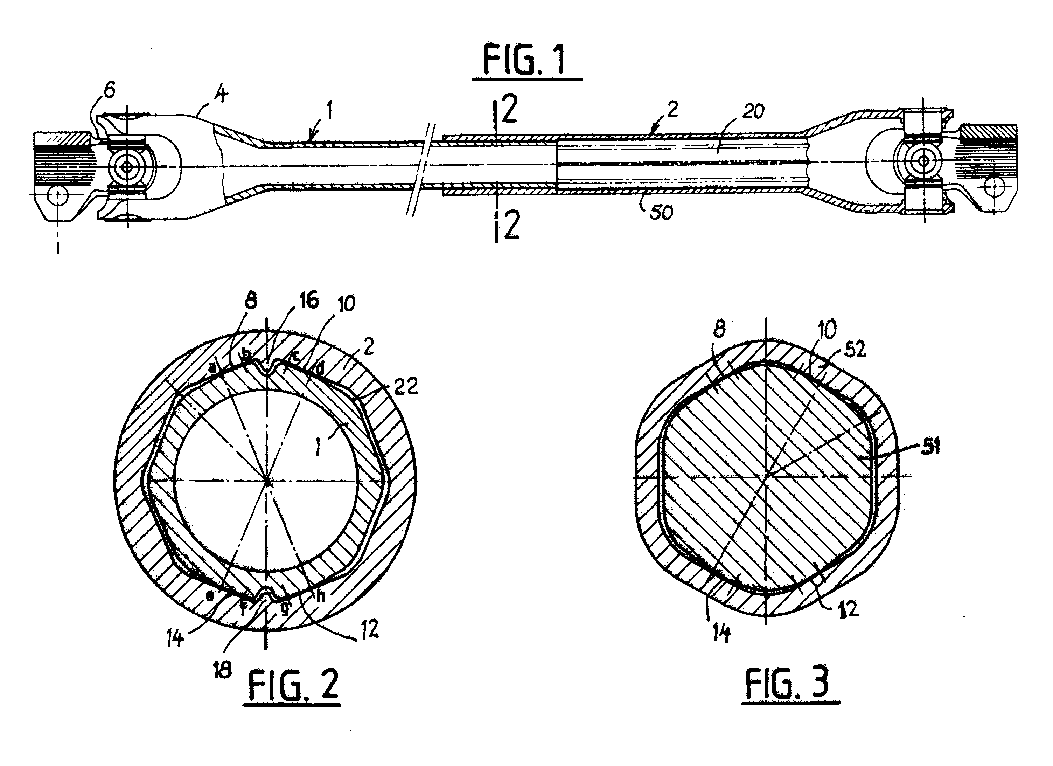

Le sous-ensemble représenté sur la Figure 1 est formé par deux arbres, respectivement 1 et 2, qui, dans le mode de réalisation représenté, sont chacun terminés par une fourche 4 de support d'un joint de cardan 6. Les arbres 1 et 2 sont emboîtés l'un dans l'autre de manière à pouvoir se déplacer télescopiquement l'un par rapport à l'autre. Toutefois, l'arbre 2 qui, comme le montre la Figure 2, a une surface extérieure cylindrique, comporte une surface interne de forme polygonale.

L'arbre intérieur 1 est également tubulaire, sa surface interne étant cylindrique, mais a une surface extérieure qui est également polygonale.

Les polygones formés par les surfaces en regard des deux arbres 1 et 2 ne sont pas réguliers, de sorte que ces deux arbres sont en contact étroit entre eux dans des zones 8, 10 et 12, 14 situées au voisinage de deux sommets diamétralement opposés 16, 18.

Comme le montre la Figure 2, les surfaces de contact 8, 10 ou 12, 14 entre les deux arbres sont disposées de manière symétrique par rapport à l'axe passant par les sommets 16 et 18. Ces surfaces de contact correspondent à une portion de plus grande largeur de l'arbre intérieur 1, et à une partie rétrécie de la cavité interne 20 de l'arbre extérieur 2.

De part et d'autre des surfaces 8, 10 et 12, 14, les deux arbres sont séparés par un jeu étroit 22.

En pratique, le sous-ensemble est réalisé au moyen d'un arbre extérieur 2 qui, avant son assemblage, comporte une surface intérieure polygonale dont quatre portions 28, 30, 32, 34, sont plus rapprochées de son centre que le reste des côtés 36. La cavité intérieure 20 de cet arbre est donc plus étroite au voisinage des deux sommets opposés 16 et 18.

A l'inverse, l'arbre intérieur 1 comporte, en deux points opposés, des portions 38, 40, 42, 44, en surépaisseur qui sont plus larges que la cavité 20 et plus particulièrement que les portions 28, 32 - 30, 34 de cette cavité.

Par suite, lorsque les deux arbres sont emmanchés à force l'un dans l'autre, ils se déforment mutuellement les surfaces 38, 40, 42, 44 de l'arbre interne 1 tendant à repousser vers l'extérieur les faces 28, 30, 32. 34 de la cavité 20 de l'arbre extérieur 2, tandis que ce dernier tend à repousser vers l'intérieur les faces correspondantes de l'arbre interne. Il se produit alors une déformation simultanée des deux arbres qui au voisinage des deux sommets diamétralement opposés 16, 18, réduit l'épaisseur de l'arbre interne 1, tandis qu'elle augmente légèrement la largeur de la cavité 20 et, entre ces sommets, tend à accroître l'épaisseur de l'arbre interne 1 et à diminuer la largeur de la cavité 20, sans cependant supprimer le jeu 22 entre les arbres. La déformation ne dépasse toutefois jamais la limite élastique. Par ailleurs, les arbres sont de préférence en un même matériau ou en des matériaux différents ayant des duretés analogues de sorte qu'ils se déforment ensemble. On obtient ainsi un emmanchement à force très important mais pratiquement sans risque de grippage des deux arbres qui sont en contact le long de surfaces parallèles entre elles et étroitement liées.

Pour obtenir un coulissement relatif des deux arbres, il est nécessaire d'exercer sur la colonne de direction un effort important, fonction bien entendu de la déformation.

Par contre, toute rotation de l'un des arbres est automatiquement transmise intégralement à l'autre.

De préférence, comme le montre la Figure 1, l'arbre 2 comporte, au-delà de sa zone d'emboîtement avec l'arbre intérieur 1, une portion de dégagement 50 dans laquelle sa cavité interne est plus large que la cavité 20. En conséquence, lors d'une rétraction du sous-ensemble, l'arbre intérieur 1 en arrivant dans cette zone ne frotte plus contre l'arbre extérieur 2. Toute contrainte est alors supprimée entre les deux arbres. Par suite, l'effort nécessaire pour le coulissement décroît progressivement au fur et à mesure de la pénétration de l'arbre 1 à l'intérieur de la zone de dégagement 50.

De même, l'arbre 1 peut comporter, au-delà de sa portion de contact avec l'arbre 2, une dimension extérieure légèrement réduite, de sorte que sa surface extérieure en ce point n'entre pas en contact avec la surface interne de la cavité de l'arbre 2 et que la zone de résistance au coulissement axial des deux arbres est limitée à une longueur bien déterminée, dans laquelle les surfaces en regard sont en contact entre elles.

Bien entendu, les surfaces en regard peuvent avoir toute forme appropriée, le polygone représenté n'étant donné qu'à titre d'exemple.

De même, l'arbre intérieur 1 peut être tubulaire, comme représenté sur les Figures 1 et 2, ou être plein, comme le montre la Figure 3. Sur cette Figure, en outre, l'arbre extérieur 52 a une forme prismatique, sa surface extérieure ayant la forme d'un polygone analogue à celui de sa surface interne. Dans ce cas, l'arbre intérieur 51 a généralement une résistance supérieure à celle de la paroi de l'arbre extérieur 52, de sorte que cette paroi est pratiquement seule à être déformée, c'est-à-dire élargie au droit des deux zones de contact opposés, tandis que l'arbre 51 conserve sensiblement sa forme initiale.

Bien entendu, cet arbre 51 comporte, de la même manière que l'arbre 1, des portions plus larges destinées à former les surfaces de contact avec l'arbre extérieur 52, la cavité de ce dernier comportant, elle, des portions plus étroites.

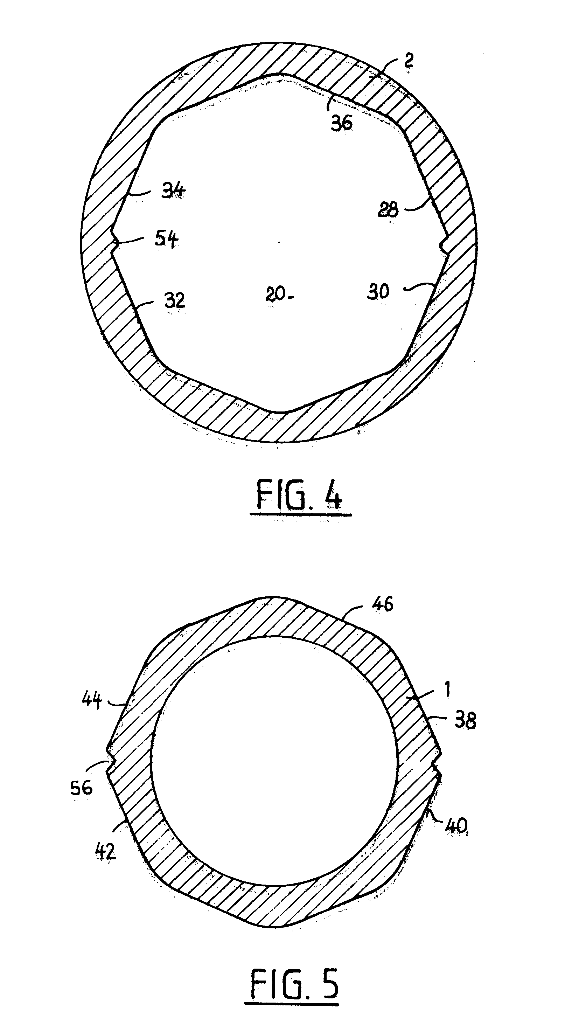

Selon une variante de réalisation, l'arbre creux 2 comporte, comme le montrent les Figures 2 et 4, en deux points diamétralement opposés qui constituent les sommets 16 et 18, une dent 54 destinée à coopérer avec une encoche 56 ménagée dans la surface extérieure de l'arbre interne 1, aux points diamétralement opposés correspondants. Grâce à cette disposition, le centrage des deux arbres l'un par rapport à l'autre, lors de leur assemblage, est facilité mais surtout toute rotation involontaire de ces deux arbres l'un par rapport à l'autre est empêchée.

Il est ainsi impossible que, sous l'effet d'une manœuvre exceptionnelle, ou même d'une tentative de vol, on obtienne un petit déplacement angulaire relatif de l'arbre extérieur 2 par rapport à l'arbre intérieur 1. Un tel déplacement, qui apparemment n'a pas de conséquence puisqu'il est limité à un angle très faible, risque en effet d'être gênant pour le conducteur qui doit ensuite provoquer un autre déplacement en sens inverse de l'un des arbres seul, avant d'obtenir leur rotation simultanée. Ce jeu dans la direction est évité par la présence des dents 54 et encoches 56.

## Revendications

1. Sous-ensemble télescopiques pour colonne de direction comportant deux arbres dont les extrémités sont emboîtées l'une dans l'autre, caractérisé en ce que les surfaces en regard des deux arbres sont en contact d'emmanchement à force, avec déformation élastique conjointe, dans deux zones étroites (8, 10 - 12, 14) voisines de deux sommets (16, 18) diamétralement opposés le long de surfaces sensiblement planes situées de part et d'autre de ces sommets, tandis qu'un jeu (22) sépare ces surfaces sur tout le reste de leur pourtour.

2. Sous-ensemble suivant la revendication 1, caractérisé en ce que l'arbre intérieur (1) a, dans les zones de contact (8, 10 - 12, 14) une plus grande largeur que sur le reste de son pourtour.

3. Sous-ensemble suivant l'une des revendications 1 et 2, caractérisé en ce que sur l'arbre extérieur (2) les zones de contact (8, 10 - 12, 14) correspondent à des parties plus étroites de la cavité interne (20) de l'arbre.

4. Sous-ensemble suivant l'une des revendications précédentes, caractérisé en ce que l'arbre intérieur (1) comporte une portion de dégagement de plus faible dimension extérieure, au-delà de son extrémité emboîtée dans l'arbre extérieur (2).

5. Sous-ensemble suivant l'une des revendications précédentes, caractérisé en ce que l'arbre extérieur (2) comporte une portion de dégagement (50) intérieurement élargie, qui prolonge son extrémité emmanchée sur l'arbre intérieur (1).

6. Sous-ensemble suivant l'une des revendication précédentes, caractérisé en ce que les extrémités de chacun des arbres (1, 2) sont chanfreinées.

7. Sous-ensemble suivant l'une des revendication précédentes, caractérisé en ce que l'arbre intérieur (1) comporte, au voisinage de deux sommets diamétralement opposés (16, 18) des portions circonférencielles qui ont, avant l'assemblage, une largeur supérieure à celle de la cavité intérieure (20) de l'arbre extérieur (2), de sorte que l'emmanchement des deux arbres provoque à la fois une réduction de cette largeur extérieure et un élargissement local de la cavité (20).

8. Sous-ensemble suivant l'une des revendications précédentes, caractérisé en ce que les surfaces en regard des deux arbres ont des sections en forme de polygone irrégulier.

9. Sous-ensemble suivant l'une des revendications précédentes, caractérisé en ce que la surface interne de l'arbre extérieur comporte, au droit des deux sommets diamétralement opposés (16, 18), des crans (54) qui coopèrent avec des encoches correspondantes (56) de l'arbre intérieur (1).

FIG. 1

FIG. 2

FIG. 3

FIG. 4

FIG. 5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 078 950 (G.M.)<br>* En entier *<br><br>--- | 1 | B 62 D 1/18 |
| A | FR-A-2 161 449 (TUBAUTO)<br>* En entier *<br><br>--- | 1 | |
| A | FR-A-2 528 001 (RENAULT)<br>* En entier *<br><br>----- | 1 | |

DOMAINES TECHNIQUES RECHERCHES (Int. Cl.4)

B 62 D

Le présent rapport de recherche a été établi pour toutes les revendications

| Lieu de la recherche | Date d'achèvement de la recherche | Examinateur |
|---|---|---|
| LA HAYE | 04.12.1986 | PIRIOU J.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82